# EUROPÄISCHE PATENTSCHRIFT

(11) **EP 3 236 038 B1**
(45) Veröffentlichungstag und Bekanntmachung des Hinweises auf die Patenterteilung: **24.07.2019**
(21) Anmeldenummer: 17000626.6
(22) Anmeldetag: 12.04.2017
(51) Int. Cl.: F01N 13/08, F01N 13/16, F01N 13/18, A01G 3/053, B25F 5/00, F02B 63/02, B25F 5/02, F01N 1/00

(54) **HECKENSCHERE**
HEDGE TRIMMER
TAILLE-HAIE

(30) Priorität: 20.04.2016 DE 102016004746
(43) Veröffentlichungstag der Anmeldung: 25.10.2017
(73) Patentinhaber: Andreas Stihl AG & Co. KG, 71336 Waiblingen (DE)
(72) Erfinder: KONSTANTINIDOU, Fevronia, 71332 Waiblingen (DE); MENZEL, Johannes, 73529 Rechberg (DE); HAMPE, David, 70376 Stuttgart (DE); STEIDINGER, Ralf, 70329 Stuttgart (DE)
(74) Vertreter: Reinhardt, Annette

(56) Entgegenhaltungen:
- DE-A1- 19 902 915
- DE-A1-102004 057 110
- US-B1- 7 174 991

## Beschreibung

Die Erfindung betrifft eine Heckenschere der im Oberbegriff des Anspruchs 1 angegebenen Gattung.

Aus der DE 10 2004 057 110 A1 ist eine Heckenschere bekannt, die einen Verbrennungsmotor besitzt. Der Verbrennungsmotor besitzt eine Abgasanlage mit einem Abgasrohr, das die Abgase des Verbrennungsmotors von einem Auslass des Verbrennungsmotors nach vorne in Richtung auf die Messerbalken leitet.

Bei bekannten Abgasschalldämpfern wird das Auslassrohr üblicherweise so angeordnet, dass zwischen dem Auslass aus dem Abgasschalldämpfer und dem Einlass in das Abgasrohr ein Abstand besteht, an dem Umgebungsluft gemeinsam mit den Abgasen aus dem Abgasschalldämpfer in das Abgasrohr eintritt. Dadurch wird der Abgasstrom gekühlt. Aufgrund des Abstands kann der Bereich des Auslasses des Abgasschalldämpfers jedoch verschmutzen, da beispielsweise unverbranntes Öl oder dgl. aus dem Auslass aus dem Abgasschalldämpfer herauslaufen und die Außenseite des Abgasschalldämpfers und benachbarte Bauteile verschmutzen kann.

Die DE 199 02 915 A1 zeigt einen Schalldämpfer, der eine äußere Wandtafel besitzt, an der ein Abgasführungselement befestigt ist. Das Abgasführungselement deckt einen Funkenfängerschirm ab. Am Abgasführungselement ist ein Venturirohr gehalten, über das Abgase an die Umgebung abgegeben werden.

Aus der US 7,174,991 B1 ist ein Abgasschalldämpfer bekannt, bei dem die Abgase durch Abgashutzen labyrinthartig geführt sind, bevor sie aus dem Abgasschalldämpfer austreten.

Der Erfindung liegt die Aufgabe zugrunde, eine Heckenschere der gattungsgemäßen Art zu schaffen, die einen einfachen Aufbau und eine geringe Verschmutzungsneigung besitzt.

Diese Aufgabe wird durch eine Heckenschere mit den Merkmalen des Anspruchs 1 gelöst.

Die Erfindung sieht vor, dass das Abgasrohr dichtend am Auslass des Schalldämpfers fixiert ist. Dadurch ist ein Austritt von Öl oder dgl. am Schalldämpferaustritt vermieden. Der Weg vom Auslass aus dem Abgasschalldämpfer bis zum Abgasauslass aus dem Gehäuse ist bei Heckenscheren üblicherweise vergleichsweise lang. Um bei einer festen, dichtenden Anbindung des Abgasrohrs an dem Abgasschalldämpfer übermäßige Spannungen im Abgasrohr aufgrund von den im Betrieb entstehenden Verwindungen des Gehäuses zu vermeiden und gleichzeitig Fertigungstoleranzen auf einfache Weise ausgleichen zu können, ist vorgesehen, dass das Abgasrohr mehrteilig ausgebildet ist. Das Abgasrohr besitzt dabei mindestens einen ersten und einen vom ersten Abschnitt getrennt ausgebildeten zweiten Abschnitt. Das Abgasrohr ist demnach mindestens zweiteilig ausgebildet. Mindestens ein Abschnitt des Abgasrohrs besteht aus Kunststoff. Vorteilhaft besteht mindestens der an dem Abgasschalldämpfer dichtend fixierte Abschnitt des Abgasrohrs aus Kunststoff. Bevorzugt bestehen alle Abschnitte des Abgasrohrs aus Kunststoff. Die Abschnitte des Abgasrohrs sind dabei Längsabschnitte, die in Strömungsrichtung des Abgases hintereinander angeordnet sind. Der erste und der zweite Abschnitt müssen dabei nicht unmittelbar aufeinander folgend angeordnet sein, sondern es können weitere Abschnitte zwischen dem ersten und dem zweiten Abschnitt vorgesehen sein. Durch die Ausbildung mindestens eines Abschnitts des Abgasrohrs aus Kunststoff kann ein geringes Gewicht des Abgasrohrs und damit ein geringes Gewicht der gesamten Heckenschere erreicht werden.

Vorteilhaft bestehen der erste Abschnitt und der zweite Abschnitt aus unterschiedlichen Materialien. Die Ausbildung des Abgasrohrs aus mindestens zwei Abschnitten ermöglicht eine gute Anpassung des verwendeten Materials auf die in dem jeweiligen Abschnitt herrschenden Anforderungen. Bevorzugt besteht der erste Abschnitt aus einem Elastomer. Der erste Abschnitt ist insbesondere der unmittelbar am Abgasschalldämpfer angeschlossene Abschnitt des Abgasrohrs. Die Ausbildung aus einem Elastomer bedingt eine hohe Elastizität des ersten Abschnitts. Dadurch können auf einfache Weise Fertigungstoleranzen, insbesondere auch Toleranzen der Position des Auslasses des Abgasschalldämpfers, ausgeglichen werden. Das Elastomer ist bevorzugt ein Fluorelastomer, insbesondere ein Fluorkautschuk (FPM oder FKM). Fluorkautschuke besitzen eine gute Kraftstoffbeständigkeit und eine hohe Temperaturbeständigkeit, wodurch sich ein vorteilhafter Einsatz für den am Abgasschalldämpfer angeordneten ersten Abschnitt ergibt. Ein solcher Fluorkautschuk ist beispielsweise der von der Firma DuPont unter dem Handelsnamen Viton vertriebene Kunststoff. Der zweite Abschnitt besteht vorteilhaft aus einem formstabilen Kunststoff. Der zweite Abschnitt kann dadurch insbesondere zur Fixierung des Abgasrohrs an benachbarten Bauteilen der Heckenschere genutzt werden. Der zweite Abschnitt besteht bevorzugt aus einem Polyamid. Es kann jedoch auch vorteilhaft sein, dass der zweite Abschnitt aus Metall, insbesondere aus Leichtmetall, bevorzugt aus Magnesium besteht. Auch bei Ausbildung mindestens eines Abschnitts des Abgasrohrs aus einem Leichtmetall kann ein geringes Gewicht des Abgasrohrs erreicht werden. Bevorzugt bestehen alle Abschnitte des Abgasrohrs aus Kunststoff oder Leichtmetall, insbesondere Magnesium.

Der Auslass aus dem Abgasschalldämpfer ist vorteilhaft an einem Auslassstutzen ausgebildet. Der Auslassstutzen besitzt insbesondere einen umlaufenden Wulst. Eine einfache Fixierung wird erreicht, wenn der erste Abschnitt den Wulst hintergreift. Um eine besonders gute Fixierung des ersten Abschnitts an dem Abgasschalldämpfer zu erreichen, kann vorgesehen sein, dass der erste Abschnitt einen metallischen Einsatz besitzt, der am Abgasschaldämpfer klemmend gehalten ist. Der metallische Einsatz ist bevorzugt elastisch ausgebildet. Eine besonders einfache Gestaltung ergibt sich, wenn der metallische Einsatz durch mindestens eine Feder, bevorzugt eine Schraubenfeder gebildet wird. Auch eine weitgehend formstabile Ausbildung des metallischen Einsatzes kann jedoch vorteilhaft sein. Über die Lebensdauer der Heckenschere ist es üblicherweise notwendig, den Abgasschalldämpfer mehrfach zu reinigen. Hierzu muss der erste Abschnitt vom Abgasschalldämpfer demontiert werden. Um sicherzustellen, dass der metallische Einsatz sich auch nach mehrfachem Abziehen des ersten Abschnitts vom Abgasschalldämpfer nicht aus dem ersten Abschnitt lösen kann, ist der metallische Einsatz bevorzugt in den ersten Abschnitt eingespritzt. Dadurch wird eine gute Fixierung des metallischen Einsatzes in dem ersten Abschnitt erreicht. Es kann jedoch auch vorgesehen sein, dass der metallische Einsatz in einer im dem ersten Abschnitt ausgebildeten Aufnahme gehalten ist. Um eine einfache Demontage des ersten Abschnitts vom Abgasschalldämpfer zu ermöglichen, ist vorteilhaft vorgesehen, dass der erste Abschnitt einen Halterand besitzt, an dem der erste Abschnitt zum Abziehen vom Auslassstutzen gegriffen werden kann. Der Halterand ist ein nach außen ragender Rand. Bevorzugt erstreckt sich der Halterand zumindest auf zwei gegenüberliegenden Seiten des ersten Abschnitts. Es kann auch vorgesehen sein, dass der Halterand weitgehend oder vollständig umlaufend um den ersten Abschnitt vorgesehen ist.

Der mindestens eine Messerbalken ragt an einer Vorderseite der Heckenschere nach vorne. Die Abgase verlassen die Auslassöffnung vorteilhaft in einer Ausblasrichtung, die bezogen auf eine übliche Abstellposition der Heckenschere nach vorne, also vom Verbrennungsmotor in Richtung auf die Messerbalken hin, und nach oben gerichtet ist. Durch die Ausrichtung der Ausblasrichtung nach vorne und oben werden die Abgase von einer zu schneidenden Hecke weg gerichtet. Gleichzeitig wird eine Verschmutzung der Messerbalken durch die Abgase weitgehend vermieden. Die Heckenschere besitzt vorteilhaft eine Längsmittelebene, die die Längsmittelachse mindestens eines Messerbalkens enthält und senkrecht zur Ebene mindestens eines Messerbalkens steht. In üblicher Abstellposition der Heckenschere ist die Längsmittelebene der Heckenschere vorteilhaft senkrecht ausgerichtet. Die Längsmittelachse mindestens eines Messerbalkens ist die in Längsrichtung verlaufende, geometrische Mittelachse des Messerbalkens. Die Längsmittelachse wird dabei in dem Längsabschnitt des Messerbalkens betrachtet, in dem Messer zum Schneiden einer Hecke an dem Messerbalken angeordnet sind. Im Bereich der Anbindung an ein Getriebe kann der Messerbalken einen von der Längsmittelachse abweichenden, insbesondere einen gekröpften Verlauf aufweisen. Die Ebene des Messerbalkens ist die die Längsmittelachse enthaltende Ebene, die durch die Messer des Messerbalkens verläuft. In dieser Ebene des Messerbalkens bewegt sich der Messerbalken. Die Ebene des Messerbalkens ist dabei parallel zur Schnittebene des Messerbalkens und kann mit der Schnittebene zusammenfallen. Die Ausblasrichtung ist von der Längsmittelebene weg gerichtet. Demnach ist die Ausblasrichtung auch von den Messerbalken weg gerichtet. Auch dadurch wird eine übermäßige Verschmutzung der Messerbalken im Betrieb vermieden.

In dem stromauf an die Auslassöffnung angrenzenden Bereich besitzt das Abgasrohr vorteilhaft einen Düsenabschnitt, in dem sich der Strömungsquerschnitt in Strömungsrichtung verringert. Dadurch kann auf einfache Weise ein übermäßiges Auffächern des Abgasstroms an der Auslassöffnung vermieden werden.

Eine einfache Fixierung des Abgasrohrs wird erreicht, wenn an dem zweiten Abschnitt ein Befestigungsauge zur Fixierung an einem Gehäuseteil der Heckenschere ausgebildet ist. An dem Befestigungsauge kann das Abgasrohr vorteilhaft an dem Gehäuseteil der Heckenschere verschraubt werden.

Vorteilhaft besitzt das Abgasrohr einen dritten Abschnitt, der an den zweiten Abschnitt anschließt. Durch die Ausbildung des Abgasrohrs aus mindestens drei Abschnitten wird eine günstige Gestaltung des Abgasrohrs erreicht. Bevorzugt bestehen der zweite und der dritte Abschnitt aus einem weitgehend formstabilen Kunststoff. Auch eine Ausbildung aus Metall kann vorteilhaft sein. Um sowohl eine günstige Ausblasrichtung als auch einen Düsenabschnitt und einen günstigen Verlauf des Abgasrohrs zwischen dem Düsenabschnitt und dem ersten Abschnitt des Abgasrohrs einfach herstellen zu können, ist eine mindestens dreiteilige Ausbildung des Abgasrohrs vorteilhaft. Um die Abschnitte aus einem formstabilen Kunststoff oder aus Metall bei der Herstellung im Spritzguss entformen zu können, sind Entformungsschrägen notwendig. Eine übermäßige Veränderung des Strömungsquerschnitts über die Länge des Abgasrohrs kann durch die Ausbildung aus mindestens drei Abschnitten vermieden werden, da sich der Strömungsquerschnitt in Richtung auf die Verbindungsbereiche zwischen zwei Abschnitten jeweils vergrößern kann. Der zweite und der dritte Abschnitt sind vorteilhaft über einen Teilabschnitt ihrer Länge ineinander gesteckt. Dadurch kann auf einfache Weise eine dichtende Verbindung des zweiten Abschnitts mit dem dritten Abschnitt erreicht werden. Alternativ oder zusätzlich kann auch eine Dichtung zwischen dem zweiten und dem dritten Abschnitt angeordnet werden. Die Ausblasöffnung ist bevorzugt an dem dritten Abschnitt ausgebildet. Der zweite Abschnitt ist vorteilhaft unmittelbar am ersten Abschnitt angeschlossen.

Die Längsmittelachse des zweiten Abschnitts schließt mit der Längsmittelachse des dritten Abschnitts vorteilhaft einen Winkel ein, der von etwa 2° bis etwa 30° beträgt. Dadurch wird ein günstiger Verlauf des Abgasrohrs sowie eine günstige Ausblasrichtung erreicht. Die Längsmittelachse des zweiten Abschnitts schließt mit der Längsmittelachse des dritten Abschnitts bevorzugt einen Winkel ein, der von etwa 5° bis etwa 15° beträgt. Bevorzugt besteht auch der dritte Abschnitt aus formstabilem Kunststoff. Es kann jedoch auch vorgesehen sein, dass der dritte Abschnitt aus Metall, insbesondere aus Leichtmetall, bevorzugt aus Magnesium besteht. Um eine gute Fixierung des dritten Abschnitts zu erreichen, weist der dritte Abschnitt bevorzugt ein Befestigungsauge zur Befestigung an einem Gehäuseteil der Heckenschere auf.

Es ist vorteilhaft vorgesehen, dass die Heckenschere ein Motorgehäuse besitzt. Zur Sicherung der Lage des Abgasrohrs ist vorteilhaft mindestens eine Rippe an dem Motorgehäuse angeordnet. Die Rippe begrenzt die Bewegung des Abgasrohrs in mindestens einer Richtung und ist bevorzugt unmittelbar benachbart zu dem Abgasrohr angeordnet. Die Rippe ist insbesondere an dem Motorgehäuse angeformt, also einteilig mit dem Motorgehäuse ausgebildet. Dadurch ergibt sich eine einfache Herstellung und eine gute Positionierung des Abgasrohrs ohne zusätzliche Montageschritte. In vorteilhafter Gestaltung besitzt die Rippe mindestens zwei winklig zueinander verlaufende Abschnitte. Dadurch lässt sich auf einfache Weise eine hohe Stabilität der Rippe erzielen.

Weitere bevorzugte Gestaltungen ergeben sich aus den nachfolgend beschriebenen Ausführungsbeispielen, die anhand der Zeichnungen beschrieben werden. Es zeigen:
- Fig. 1: eine perspektivische Darstellung eines Ausführungsbeispiels einer Heckenschere,
- Fig. 2: eine schematische Darstellung des Antriebs der Messerbalken der Heckenschere,
- Fig. 3: eine Ansicht der Heckenschere in Abstellposition von unten,
- Fig. 4: eine Draufsicht auf das Getriebegehäuse und das Abgasrohr in Abstellposition von oben,
- Fig. 5: eine Seitenansicht des Abgasschalldämpfer und des Abgasrohrs in Richtung des Pfeils V in Fig. 3,
- Fig. 6: eine Seitenansicht in Richtung des Pfeils VI in Fig. 5,
- Fig. 7: eine teilgeschnittene Darstellung von Abgasschalldämpfer und Abgasrohr,
- Fig. 8: eine Seitenansicht eines Ausführungsbeispiels eines ersten Abschnitts des Abgasrohrs,
- Fig. 9: einen Schnitt entlang der Linie IX-IX in Fig. 8,
- Fig. 10: einen Schnitt durch ein weiteres Ausführungsbeispiel des ersten Abschnitts eines Abgasrohrs in einer Schnittebene entlang der Linie IX-IX in Fig. 8
- Fig. 11: eine ausschnittsweise Ansicht eines Ausführungsbeispiels der Heckenschere in Abstellposition von unten,
- Fig. 12: eine ausschnittsweise perspektivische Darstellung des Ausführungsbeispiels der Heckenschere aus Fig. 11 von unten.

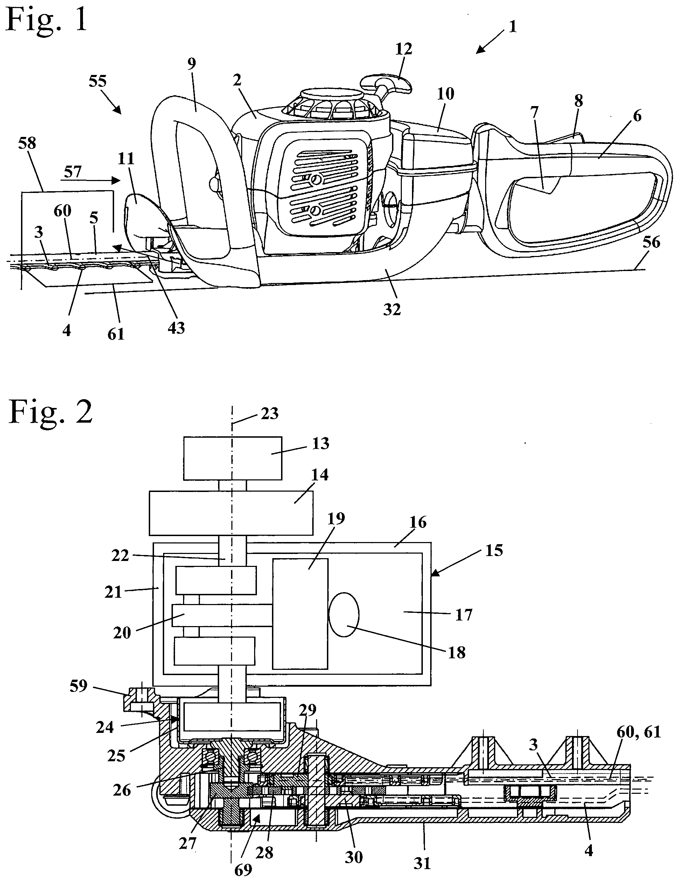

Fig. 1 zeigt exemplarisch den Aufbau einer Heckenschere 1. Die Heckenschere 1 besitzt ein Gehäuse 2, in dem ein Antriebsmotor, im Ausführungsbeispiel ein Verbrennungsmotor, angeordnet ist. Zum Starten des Verbrennungsmotors ist ein aus dem Gehäuse 2 ragender Anwerfgriff 12 vorgesehen. Das Gehäuse 2 ist ein Motorgehäuse und an einem Griffgehäuse 32 gehalten. Im Ausführungsbeispiel ist am Griffgehäuse 32 ein hinterer Handgriff 6 drehbar gelagert. Am hinteren Handgriff 6 sind Bedienelemente, nämlich ein Gashebel 7 sowie eine Gashebelsperre 8 gelagert. Im Bereich zwischen dem Gehäuse 2 und dem hinteren Handgriff 6 ist ein Kraftstofftank 10 am Griffgehäuse 32 integriert. Die Heckenschere 1 besitzt einen ersten Messerbalken 3 und einen zweiten Messerbalken 4, die an einer Führung 5 geführt und vom Verbrennungsmotor hin- und hergehend angetrieben sind. Der Messerbalken 3 besitzt eine Längsmittelachse 60, die in Längsrichtung der Heckenschere 1 und in Längsrichtung des Messerbalkens 3 ragt und die die geometrische Mitte des Messerbalkens 3 bezeichnet. Der Messerbalken 3 besitzt eine Messerbalkenebene 61, die die Längsmittelachse 60 enthält und die die am Messerbalken 3 angeordneten Messer schneidet. Der Messerbalken 3 bewegt sich in der Messerbalkenebene 61. Die Messerbalkenebene 61 verläuft parallel zur Schnittebene der Messerbalken 3, 4, in der eine Hecke oder dgl. geschnitten wird. Die Messerbalkenebene 61 kann auch mit der Schnittebene zusammenfallen. Der Messerbalken 4 besitzt eine entsprechende Längsmittelachse und eine parallel zur Messerbalkenebene 61 verlaufende Messerbalkenebene, die in den Figuren nicht im Einzelnen gezeigt sind.

Am Griffgehäuse 32 ist an der den Messerbalken 3, 4 zugewandten Seite des Gehäuses 2 ein Griffrohr 9 angeordnet, das so wie der hintere Handgriff 6 zum Führen der Heckenschere 1 dient. Am Griffgehäuse 32 ist außerdem ein Schutz 11 ausgebildet, der die dem Gehäuse 2 zugewandte Seite der Messerbalken 3, 4 abschirmt. Die Messerbalken 3, 4 ragen an einer Vorderseite 57 der Heckenschere 1 nach vorn. In Fig. 1 ist die Heckenschere 1 in einer Abstellposition 55 gezeigt, in der die Heckenschere 1 auf einer ebenen, horizontalen Abstellfläche 56 abgestellt ist. In dieser Lage verlaufen die Längsmittelachse 60 des Messerbalkens 3 sowie die Messerbalkenebene 61 vorteilhaft horizontal zur Abstellfläche 56. Auch der hintere Handgriff 6 ist vorteilhaft etwa parallel zur Abstellfläche 56 ausgerichtet. Die Abgase des Verbrennungsmotors werden aus dem Gehäuse 2 in einer Ausblasrichtung 43 ausgeblasen, die nach vorne, also in einer Richtung vom hinteren Handgriff 6 und vom Gehäuse 2 in Richtung auf die Messerbalken 3, 4, und bezogen auf die Abstellposition 55 nach oben gerichtet ist.

Fig. 2 zeigt den Aufbau des Antriebs der Heckenschere 1 im Einzelnen. Die Heckenschere 1 besitzt den Verbrennungsmotor 15. Der Verbrennungsmotor 15 besitzt einen Zylinder 16, in dem ein Brennraum 17 ausgebildet ist. Der Brennraum 17 ist von einem im Zylinder 16 hin- und hergehend gelagerten Kolben 19 begrenzt. Der Kolben 19 treibt über ein Pleuel 20 eine in einem Kurbelgehäuse 21 drehbar gelagerte Kurbelwelle 22 an. Die Kurbelwelle 22 wird um eine Drehachse 23 rotierend angetrieben. Aus dem Brennraum 17 führt ein Brennraumauslass 18, durch den Abgase den Brennraum 17 verlassen. An der Kurbelwelle 22 ist im Ausführungsbeispiel ein Lüfterrad 14 fixiert, das zur Förderung von Kühlluft für den Verbrennungsmotor 15 dient. An der dem Verbrennungsmotor 15 abgewandten Seite des Lüfterrads 14 ist eine Anwerfvorrichtung 13 angeordnet. Die Anwerfvorrichtung 13 ist vorteilhaft ein Seilzugstarter, der zum Anwerfen den in Fig. 1 gezeigten Anwerfgriff 12 besitzt. Auch eine elektrisch angetriebene Anwerfvorrichtung 13 kann jedoch vorteilhaft sein.

An der der Anwerfvorrichtung 13 abgewandten, in Abstellposition 55 (Fig. 1) unten liegenden Seite des Verbrennungsmotors 15 ist eine Fliehkraftkupplung 24 angeordnet. Die Fliehkraftkupplung 24 besitzt eine Kupplungstrommel 25, die drehfest mit einem Antriebsritzel 26 verbunden ist. In eingekuppeltem Zustand, also nach Überschreiten einer Einkuppeldrehzahl, verbindet die Fliehkraftkupplung 24 die Kurbelwelle 22 drehfest mit dem Antriebsritzel 26. Das Antriebsritzel 26 ist das Eingangsritzel eines Getriebes 69. Das Getriebe 69 ist in einem Getriebegehäuse 31 der Heckenschere 1 angeordnet. Das Antriebsritzel 26 ist im Ausführungsbeispiel drehfest mit einem Antriebsrad 27 verbunden, das ein Abtriebsrad 28 antreibt. Das Abtriebsrad 28 besitzt Exzenter 29 und 30, die die Messerbalken 3 und 4 gegensinnig hin- und hergehend antreiben. Das Getriebegehäuse 31 besitzt einen Befestigungsflansch 59, der zur Fixierung des Getriebegehäuses 31, vorteilhaft am Kurbelgehäuse 21 des Verbrennungsmotors 15, dient.

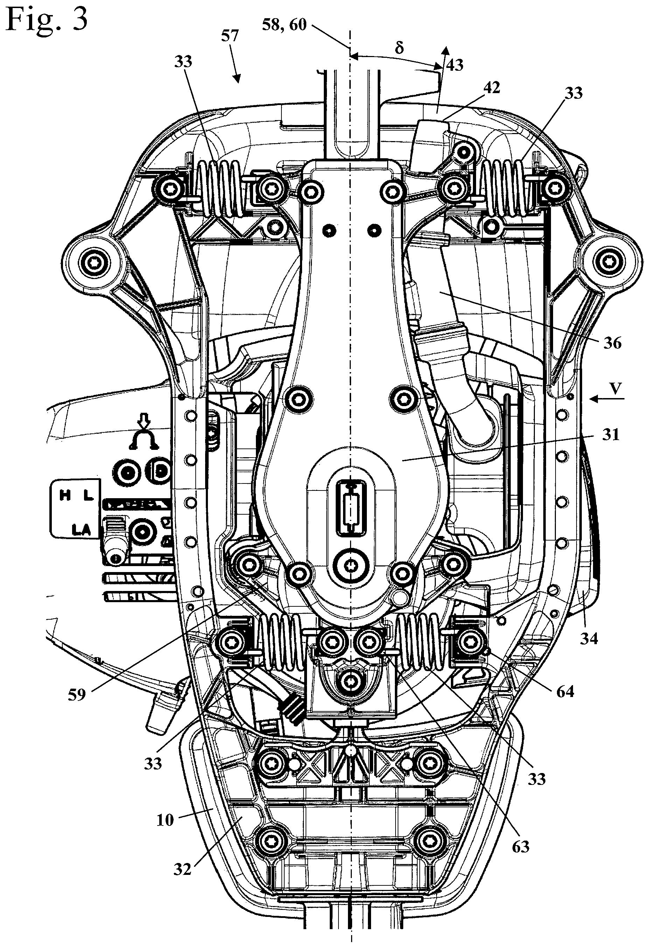

Fig. 3 zeigt die Anordnung des Getriebegehäuses 31 am Griffgehäuse 32. Das Getriebegehäuse 31 ist über Antivibrationselemente 33 am Griffgehäuse 32 schwingungsentkoppelnd gehalten. Im Ausführungsbeispiel sind vier Antivibrationselemente 33 vorgesehen, die jeweils als Schraubenfedern ausgebildet sind. Jedes Antivibrationselement 33 besitzt ein erstes Ende 63, das am Getriebegehäuse 31 festgelegt ist sowie ein zweites Ende 64, das am Griffgehäuse 32 fixiert ist. Im Ausführungsbeispiel erfolgt die Fixierung über Befestigungsschrauben. Das Getriebegehäuse 31 ist in Abstellposition 55 (Fig. 1) unterhalb des Verbrennungsmotors 15 angeordnet. Am Brennraumauslass 18 des Verbrennungsmotors 15 ist ein Abgasschalldämpfer 34 fixiert, in den die Abgase strömen. Am Abgasschalldämpfer 34 ist ein Abgasrohr 36 angeordnet, durch das die Abgase in Richtung zur Vorderseite 57 geführt sind. Das Abgasrohr 36 besitzt eine Auslassöffnung 42, durch die die Abgase das Abgasrohr 36 in der Ausblasrichtung 43 verlassen.

Die Heckenschere 1 besitzt eine Mittelebene 58, die die Längsmittelachse 60 enthält. Die Mittelebene 58 verläuft senkrecht zur Messerbalkenebene 61 des Messerbalkens 3. In Abstellposition 55 ist die Mittelebene 58 vorteilhaft senkrecht zur Abstellfläche 56 angeordnet. Dies ist in Fig. 1 schematisch gezeigt. Die Mittelebene 58 steht in Fig. 3 senkrecht zur Blattebene. Die Ausblasrichtung 43 ist von der Mittelebene 58 weg gerichtet. Die Ausblasrichtung 43 schließt mit der Mittelebene 58 einen Winkel δ ein, der vorteilhaft mindestens 2°, insbesondere mindestens 5°, vorzugsweise etwa 5° bis etwa 20° beträgt. In Fig. 3 ist auch der Befestigungsflansch 59 des Getriebegehäuses 31 gezeigt, der im Ausführungsbeispiel am Kurbelgehäuse 21 des Verbrennungsmotors 15 (Fig. 2) fixiert ist. Dadurch ist der Verbrennungsmotor 15 vom Griffgehäuse 32 schwingungsentkoppelt.

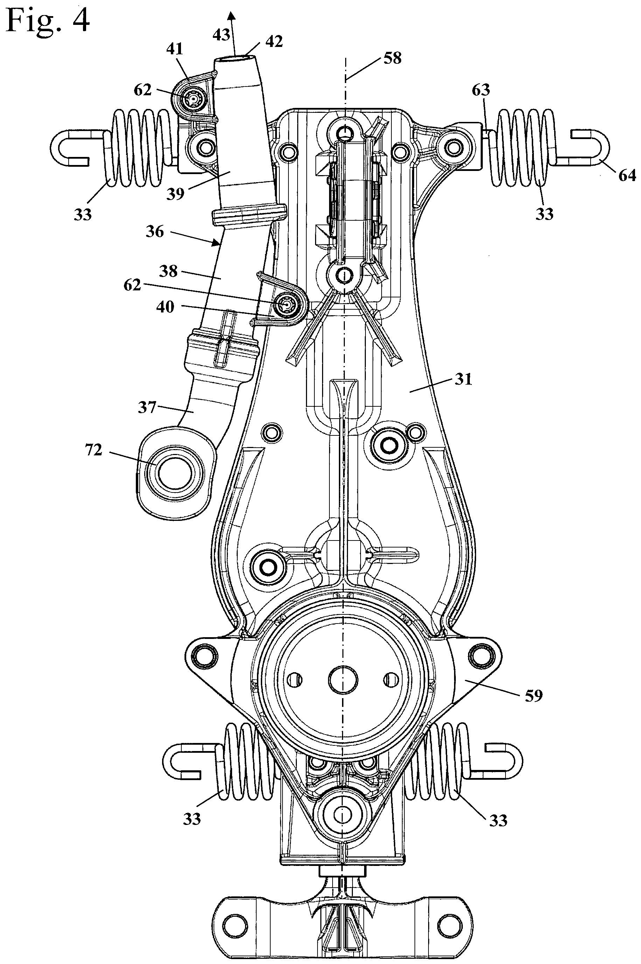

In Fig. 4 ist die Anordnung des Abgasrohrs 36 am Getriebegehäuse 31 im Einzelnen gezeigt. Das Abgasrohr 36 ist aus drei Abschnitten, nämlich einem ersten Abschnitt 37, einem zweiten Abschnitt 38 und einem dritten 39 aufgebaut, die in Strömungsrichtung vom Abgasschalldämpfer 34 zur Auslassöffnung 42 aufeinander folgend angeordnet sind. Im Ausführungsbeispiel schließen die Abschnitte 37, 38 und 39 unmittelbar aneinander an. Es kann auch vorgesehen sein, dass das Abgasrohr 36 nur zwei Abschnitte aufweist. Auch eine größere Anzahl von Abschnitten des Abgasrohrs 36 kann vorteilhaft sein. Alle Abschnitte 37, 38, 39 des Abgasrohrs 36 bestehen aus Kunststoff. Der erste Abschnitt 37 besteht vorteilhaft aus einem Elastomer. Dadurch besitzt der erste Abschnitt 37 eine hohe Elastizität. Das Elastomer ist insbesondere ein Fluorelastomer, bevorzugt FPM bzw. FKM. Der zweite Abschnitt 38 besteht vorteilhaft aus einem formstabilen Kunststoff, insbesondere einem Thermoplast. Bevorzugt besteht der zweite Abschnitt 38 aus einem Polyamid. Der dritte Abschnitt 39 besteht vorteilhaft ebenfalls aus einem formstabilen Kunststoff, insbesondere aus einem Thermoplast wie beispielsweise Polyamid. Bevorzugt bestehen der zweite Abschnitt 38 und der dritte Abschnitt 39 aus dem gleichen Material. Es kann jedoch auch vorgesehen sein, dass der zweite Abschnitt 38 und/oder der dritte Abschnitt 39 aus Metall, insbesondere aus einem Leichtmetall, bevorzugt aus Magnesium bestehen.

Das Abgasrohr 36 besitzt einen ersten Endabschnitt 72, mit dem das Abgasrohr 36 dichtend am Abgasschalldämpfer 34 (Fig. 3) angeschlossen ist. Am zweiten Abschnitt 38 ist ein Befestigungsauge 40 vorgesehen, das seitlich vom rohrförmigen Grundkörper des zweiten Abschnitts 38 absteht und an dem das Abgasrohr 36 am Getriebegehäuse 31 fixiert ist. Im Ausführungsbeispiel ist eine Befestigungsschraube 62 zur Fixierung am Getriebegehäuse 31 vorgesehen. Das Getriebegehäuse 31 besteht vorteilhaft aus Metall. Der dritte Abschnitt 39 weist ein Befestigungsauge 41 auf. Wie Fig. 4 zeigt, ragen die Befestigungsaugen 40 und 41 auf etwa gegenüberliegende Seiten des Abgasrohrs 36. Auch am Befestigungsauge 41 ist das Abgasrohr 36 am Getriebegehäuse 31 fixiert, im Ausführungsbeispiel mit einer Befestigungsschraube 62. Fig. 4 zeigt auch den Befestigungsflansch 59 des Getriebegehäuses 31.

Im Betrieb entstehen aufgrund der hin- und hergehenden Bewegung der Messerbalken 3 und 4 im Getriebegehäuse 31 Kräfte, die zu einer Verwindung, also einer geringfügigen Torsion des Getriebegehäuses 31 führen. Dadurch, dass das Abgasrohr 36 im ersten Abschnitt 37 elastisch ausgebildet ist, können solche Relativbewegungen des Getriebegehäuses 31 gegenüber dem Verbrennungsmotor 15 trotz der vergleichsweise großen Länge des Abgasrohrs 36 ausgeglichen werden. Dadurch ist eine feste Anbindung der Abschnitte 38 und 39 am Getriebegehäuse 31 trotz der Ausbildung der Abschnitte 38 und 39 aus formstabilem Kunststoff und der dichtenden Fixierung des ersten Abschnitts 37 am Abgasschalldämpfer 34 möglich.

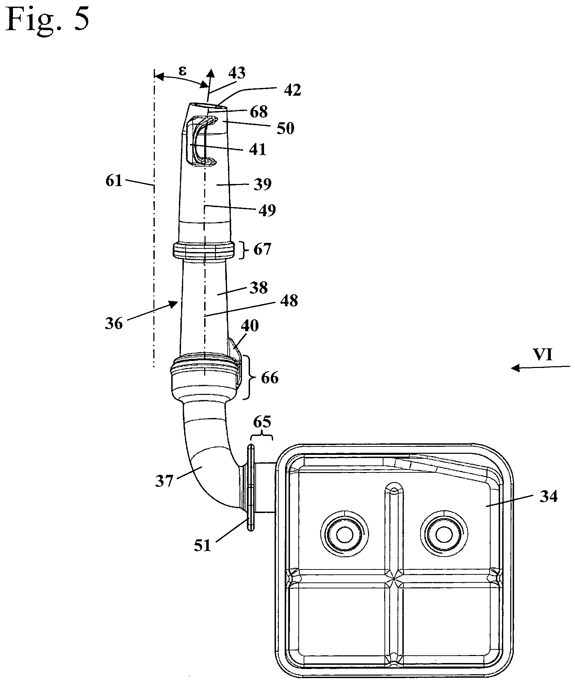

Fig. 5 zeigt den Abgasschalldämpfer 34 mit daran angeordnetem Abgasrohr 36. Der erste Abschnitt 37 des Abgasrohrs 36 ist am Abgasschalldämpfer 34 in einem Verbindungsbereich 65 fixiert. Der erste Abschnitt 37 besitzt am Verbindungsbereich 65 einen nach außen ragenden Halterand 51, an dem ein Bediener das Abgasrohr 36 greifen und vom Abgasschalldämpfer 34 abziehen kann, um den Abgasschalldämpfer 34 zu reinigen. Anschließend kann das Abgasrohr 36 wieder am Abgasschalldämpfer 34 montiert werden. Auch hierzu kann der Bediener am Halterand 51 drücken, um den ersten Abschnitt 37 auf einen Auslassstutzen des Abgasschalldämpfers 34 aufzuschieben. Der erste Abschnitt 37 ist mit dem zweiten Abschnitt 38 in einem Verbindungsbereich 66 verbunden. Das Befestigungsauge 40 ist, wie Fig. 5 zeigt, unmittelbar benachbart zum Verbindungsbereich 66 angeordnet. Der erste Abschnitt 38 besitzt eine Längsmittelachse 48, die im Ausführungsbeispiel etwa parallel zur Messerbalkenebene 61 des Messerbalkens 3 verläuft. Der zweite Abschnitt 38 und der dritte Abschnitt 39 sind in einem Verbindungsbereich 67 miteinander verbunden. Der zweite Abschnitt 39 besitzt eine Längsmittelachse 49, die im Ausführungsbeispiel ebenfalls etwa parallel zur Messerbalkenebene 61 verläuft. Es kann auch vorgesehen sein, dass sich die Längsmittelachse 49 in Strömungsrichtung der Abgase von der Messerbalkenebene 61 entfernt. Die Ausblasrichtung 43 schließt mit der Ebene 41 einen Winkel ε ein, der größer als 0° ist. Der Winkel ε beträgt vorteilhaft mehr als 2°, insbesondere von etwa 5° bis etwa 20°. Der Winkel ε ist dabei so ausgerichtet, dass die Abgase in der Ausblasrichtung 43 von der Messerbalkenebene 61 wegströmen. Der aus der Auslassöffnung 42 austretende Abgasstrom ist damit von der Messerbalkenebene 61 des Messerbalkens 3 weg und bezogen auf die Abstellposition 55 der Heckenschere 1 (Fig. 1) nach vorne und oben gerichtet.

Der dritte Abschnitt 39 besitzt an seinem stromab liegenden Ende, das die Auslassöffnung 42 aufweist, einen Düsenabschnitt 50. Im Düsenabschnitt 50 verringert sich der Strömungsquerschnitt. Gleichzeitig werden die Abgase in die Ausblasrichtung 43 gelenkt. Der Düsenabschnitt 50 besitzt eine Längsmittelachse 68, die in Ausblasrichtung 43 ausgerichtet ist und mit der Messerbalkenebene 61 den Winkel ε einschließt.

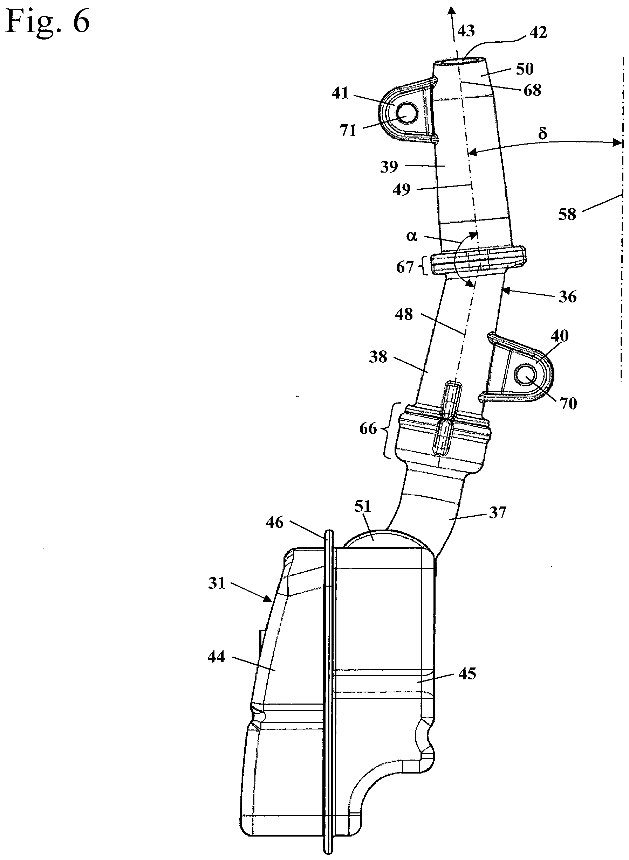

Fig. 6 zeigt Abgasschalldämpfer 34 und Abgasrohr 36 in einer Ansicht von unten, also senkrecht zur Abstellfläche 56 in Abstellposition 55 (Fig. 1). In dieser Ansicht liegen die Längsmittelachsen 49 und 68 deckungsgleich übereinander und schließen mit der Mittelebene 58 den Winkel δ ein. Wie Fig. 6 auch zeigt, schließen die Längsmittelachsen 48 und 49 in der Ansicht senkrecht zur Abstellfläche 56 bzw. zur Messerbalkenebene 61 des Messerbalkens 3 (Fig. 5) einen Winkel α ein. Der Winkel α beträgt vorteilhaft von etwa 2° bis etwa 30°, insbesondere von etwa 5° bis etwa 15°. Der erste Abschnitt 37 besitzt einen bogenförmigen Verlauf, wie die Figuren 5 und 6 zeigen. Durch die dreiteilige Ausbildung des Abgasrohrs 36 kann der in den Figuren dargestellte Verlauf des Abgasrohrs 36 auf einfache Weise hergestellt werden. Wie Fig. 6 auch zeigt, besitzt das Befestigungsauge 40 eine Befestigungsöffnung 70 und das Befestigungsauge 41 eine Befestigungsöffnung 71. Durch die Befestigungsöffnungen 70, 71 ragen die Befestigungsschrauben 62 (Fig. 4).

In Fig. 6 ist auch die Gestaltung des Abgasschalldämpfers 34 gezeigt. Der Abgasschalldämpfer 34 besitzt eine erste Halbschale 44 und eine zweite Halbschale 45, die an einem umlaufenden Rand 46 miteinander verbunden sind. Die Halbschalen 44 und 45 sind vorteilhaft Tiefziehteile aus Blech.

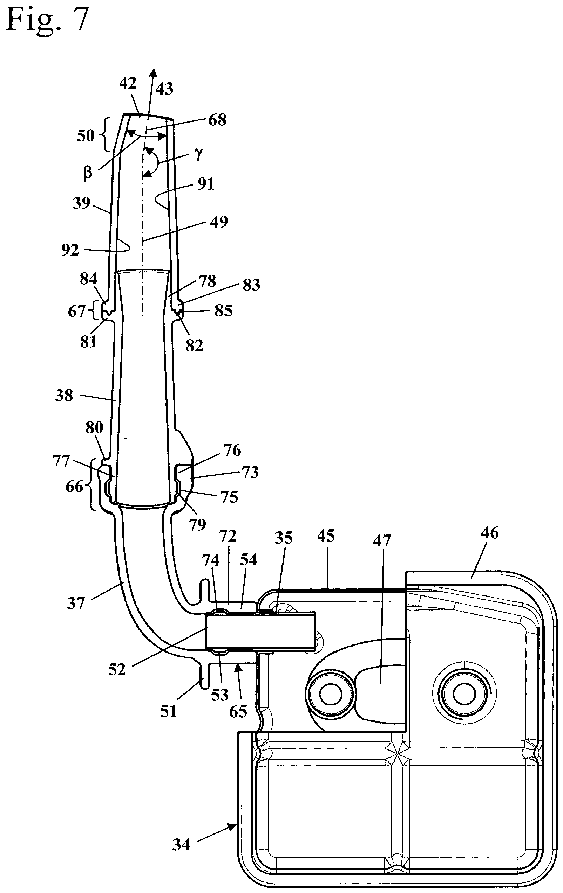

Wie Fig. 7 zeigt, besitzt der Abgasschalldämpfer 34 einen Auslassstutzen 35, der an der Halbschale 45 gehalten ist. Aufgrund des vergleichsweise einfachen Aufbaus des Abgasschalldämpfers 34 sind die Toleranzen der Lage des Auslassstutzens 35 vergleichsweise groß. Aufgrund der elastischen Ausbildung des ersten Abschnitts 37 können diese Toleranzen ausgeglichen werden. Wie Fig. 7 auch zeigt, besitzt die erste Halbschale 45 eine Einlassöffnung 47, durch die Abgase aus dem Brennraumauslass 18 in den Abgasschalldämpfer 34 einströmen. Der Auslassstutzen 35 besitzt einen Auslass 52, durch den die Abgase den Abgasschalldämpfer 34 verlassen.

Wie Fig. 7 zeigt, ist der erste Abschnitt 37 im Verbindungsbereich 65 dichtend am Auslassstutzen 35 des Abgasschalldämpfers 34 gehalten. Der Endabschnitt 72 des ersten Abschnitts 37 ist über den Auslassstutzen 35 geschoben. Am Auslassstutzen 35 ist ein nach Außen ragender Wulst 53 ausgebildet, der im Ausführungsbeispiel umlaufend ausgebildet ist. Der Wulst 53 wird von einem Halteabschnitt 54 am ersten Endabschnitt 72 hintergriffen. Der Wulst 53 ragt dabei in eine umlaufende Nut 74 des Endabschnitts 72. Durch entsprechende Auslegung der Innendurchmesser des Halteabschnitts 54 und der Nut 74 wird eine dichtende Fixierung erreicht.

Im Verbindungsbereich 66 ragt ein erster Endabschnitt 77 des zweiten Abschnitts 38 in einen zweiten Endabschnitt 73 des ersten Abschnitts 37 des Abgasrohrs 36. Auch die Abschnitte 37 und 38 sind im Verbindungsbereich 66 dichtend miteinander verbunden. Hierzu ist ein umlaufender Wulst 79 am Endabschnitt 77 ausgebildet, der in eine Nut 75 des Endabschnitts 73 ragt und von einem Halteabschnitt 76 des Endabschnitts 73 hintergriffen wird. Am zweiten Abschnitt 38 ist ein Anschlagrand 80 ausgebildet, an dem der erste Abschnitt 37 mit seiner Stirnseite vorteilhaft anschlägt.

Der zweite Abschnitt 38 und der dritte Abschnitt 39 sind im Verbindungsbereich 67 dichtend miteinander verbunden. Der zweite Abschnitt 38 besitzt einen zweiten Endabschnitt 78, der in einen ersten Endabschnitt 83 des dritten Abschnitts 39 ragt. Am zweiten Endabschnitt 78 des zweiten Abschnitts 38 ist ein nach außen ragender Rand 81 ausgebildet. Der erste Endabschnitt 83 des dritten Abschnitts 39 besitzt einen nach außen ragenden Rand 84. Die Ränder 81 und 84 liegen stirnseitig aneinander an. Zur dichtenden Verbindung ist am Rand 84 ein Steg 85 vorgesehen, der in eine Nut 82 des Rands 81 ragt. Der Steg 85 und die Nut 82 erstrecken sich dabei in axialer Richtung und verlaufen ringförmig um die Längsmittelachse 49 des dritten Abschnitts 39. Es kann auch vorgesehen sein, dass zwischen dem zweiten Abschnitt 38 und dem dritten Abschnitt 39 eine Dichtung angeordnet ist. Um die Verbindung zwischen dem zweiten Abschnitt 38 und dem dritten Abschnitt 39 zu sichern und auch bei den im Betrieb entstehenden Vibrationen ein Lösen oder Lockern der Verbindung zu vermeiden, kann zusätzlich eine Rastverbindung zwischen dem zweiten Abschnitt 38 und dem dritten Abschnitt 39 vorgesehen sein, die beispielsweise durch einen oder mehrere Rasthaken gebildet sein kann. Alternativ kann auch eine Klebverbindung vorteilhaft sein.

Wie Fig. 7 zeigt, besitzt der zweite Abschnitt 38 seinen kleinsten Innendurchmesser im Ausführungsbeispiel im Bereich des Rands 81. Ausgehend von diesem Bereich vergrößert sich der Innendurchmesser in Richtung auf den ersten Endabschnitt 77 und in Richtung auf den zweiten Endabschnitt 78. Dadurch kann der im Innenraum des zweiten Abschnitts 38 gebildete Kanal bei der Herstellung des zweiten Abschnitts 38 im Spritzgussverfahren von den Endabschnitten 77 und 78 aus auf einfache Weise entformt werden. Der Innendurchmesser des dritten Abschnitts 39 verringert sich vom ersten Endabschnitt 83 bis zur Auslassöffnung 42. Der dritte Abschnitt 39 ist deshalb bei der Herstellung im Spritzgussverfahren vom ersten Endabschnitt 83 aus zu entformen. Die Gestaltung des Düsenabschnitts 50 ist so gewählt, dass sich trotz des Winkels γ zwischen den Längsmittelachsen 49 und 68 keine Hinterschnitte ergeben. Wie Fig. 7 zeigt, verringert sich der Strömungsquerschnitt im Düsenabschnitt 50. Der dritte Abschnitt 39 besitzt eine erste Innenwand 91, die in der gezeigten Schnittebene senkrecht zur Messerbalkenebene 61 und senkrecht zur Abstellfläche 56 in Abstellposition 55 (Fig. 1) verläuft. Die gegenüberliegende Innenwand 92 besitzt am Übergang in den Düsenabschnitt 50 einen Knick. Dadurch ergibt sich der Winkel zwischen den Längsmittelachsen 49 und 68. Im Düsenabschnitt 50 schließen die Innenwände 91 und 92 einen Winkel β miteinander ein, der von 10° bis 40°, insbesondere von 20° bis 30° betragen kann. Die Längsmittelachsen 49 und 68 schließen in der gezeigten Schnittdarstellung einen Winkel γ ein, der vorteilhaft kleiner als 178° ist. Der Winkel γ beträgt vorteilhaft von etwa 160° bis etwa 175°.

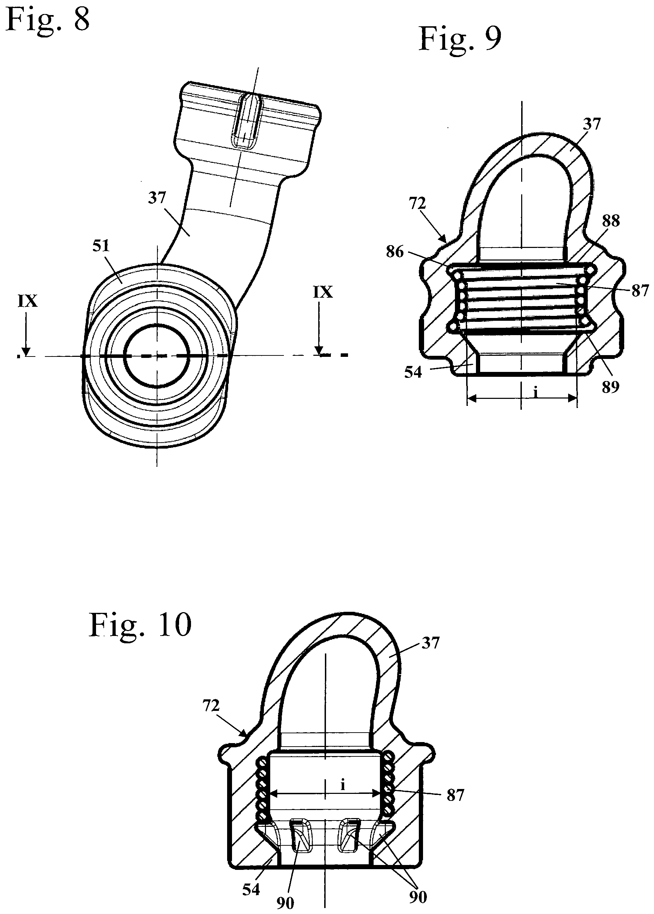

Fig. 8 zeigt ein Ausführungsbeispiel des ersten Abschnitts 37. Wie Fig. 8 zeigt, ist der Halterand 51 nicht umlaufend um den ersten Abschnitt 37 ausgebildet, sondern erstreckt sich über zwei Teilbereiche, die einander etwa gegenüber liegen. Die Teilbereiche des Halterands 51 sind dabei so angeordnet, dass sich ein geringer Bauraumbedarf ergibt und der Halterand 51 gleichzeitig gut vom Bediener gegriffen werden kann.

Beim Ausführungsbeispiel nach Fig. 9 weist der erste Abschnitt 37 an seinem ersten Endabschnitt 72 einen metallischen Einsatz auf, der die Klemmung auf dem Auslassstutzen 35 des Abgasschalldämpfers 34 bewirkt. Der metallische Einsatz ist dabei im Ausführungsbeispiel elastisch ausgebildet. Im Ausführungsbeispiel ist der metallische Einsatz als Feder 87 ausgebildet. Die Feder 87 ist eine Schraubenfeder, die ihren geringsten Innendurchmesser i in einem mittleren Bereich ihrer Längserstreckung besitzt. In ihren Randbereichen weitet sich die Schraubenfeder auf. Die Feder 87 ist in einem im ersten Endabschnitt 72 ausgebildeten Aufnahmeraum 86 angeordnet. Der Aufnahmeraum 86 besitzt einen ersten Absatz 88 sowie einen gegenüberliegenden zweiten Absatz 89. An den Absätzen 88 und 89 stützt sich die Feder 87 in axialer Richtung ab. Der Halteabschnitt 54, der die Dichtwirkung herstellt, kann bei dieser Ausführung kürzer ausgebildet sein als bei dem in Fig. 7 gezeigten Ausführungsbeispiel. Die Feder 87 kann am Wulst 53 angeordnet sein oder den Wulst 53 hintergreifen.

Fig. 10 zeigt ein weiteres Ausführungsbeispiel des ersten Endabschnitts 72, bei dem eine Feder 87 in den Endabschnitt 72 eingespritzt ist. Der Innendurchmesser i der Feder 87 ist in diesem Ausführungsbeispiel konstant. Zwischen der Feder 87 und dem Halteabschnitt 54 sind Vertiefungen 90 an der Innenwand des ersten Abschnitts 37 vorgesehen, die die Fixierung der Feder 87 bei der Herstellung des ersten Abschnitts 37 über ein entsprechendes Werkzeug ermöglichen und die gleichzeitig die Entformung des ersten Abschnitts 37 vereinfachen.

Gleiche Bezugszeichen kennzeichnen in allen Ausführungsbeispielen einander entsprechende Elemente. Die zu den Ausführungen nach den Figuren 9 und 10 nicht gezeigten Elemente sind vorteilhaft entsprechend zum ersten Ausführungsbeispiel ausgebildet. Die beschriebenen Verbindungen der Abschnitte 37, 38 und 39 können in beliebiger Weise miteinander kombiniert werden. An allen Verbindungsbereichen 65, 66, 67 können Dichtungen und/oder zusätzliche Sicherungselemente wie Rastelemente oder dgl. vorteilhaft sein. Zusätzliche Sicherungselemente können auch durch eine oder mehrere Schweißverbindungen gebildet werden.

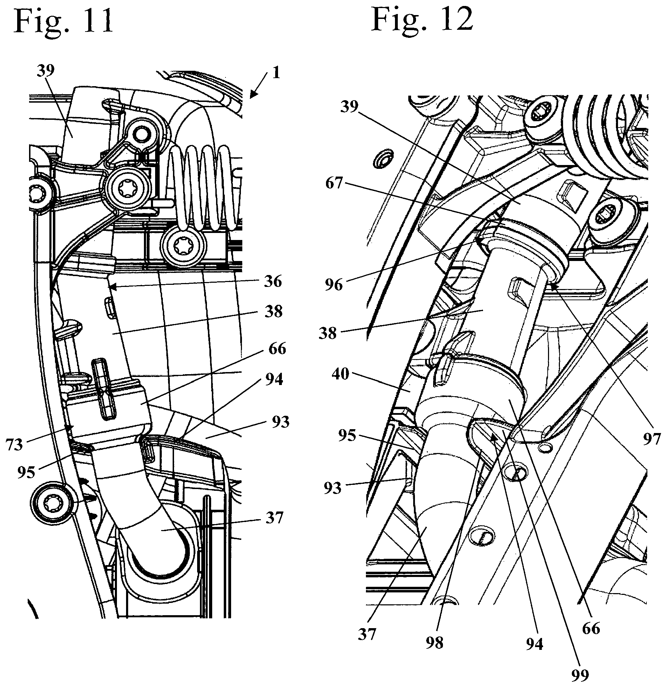

Die Figuren 11 und 12 zeigen ausschnittsweise ein weiteres Ausführungsbeispiel einer Heckenschere 1. Gleiche Bezugszeichen kennzeichnen in allen Figuren einander entsprechende Elemente. Die Heckenschere 1 aus den Figuren 11 und 12 ist im Wesentlichen gleich aufgebaut wie die in den Figuren 1 bis 10 dargestellte Heckenschere 1 und deren Komponenten. Es ist ein Abgasrohr 36 vorgesehen, das aus vorteilhaft drei Abschnitten 37, 38 und 39 besteht. Beim Ausführungsbeispiel nach den Figuren 11 und 12 ist zusätzlich eine Sicherung der Verbindungsstelle 66 vorgesehen, um zu verhindern, dass die Abschnitte 37 und 38 des Abgasrohrs 36 beispielsweise von Ästen, die seitlich unter das Abgasrohr 36 geschoben werden, auseinander gezogen werden können. Die Heckenschere 1 besitzt ein Motorgehäuse 93, in dem der Verbrennungsmotor 15 (Fig. 2) angeordnet ist. Das Motorgehäuse 93 kann auch teilweise durch den Verbrennungsmotor 15 selbst, beispielsweise durch das Kurbelgehäuse 21 (Fig. 2) des Verbrennungsmotors 15, gebildet sein.

Im Ausführungsbeispiel nach den Figuren 11 und 12 sind am Motorgehäuse 93 Rippen 94 und 95 angeordnet. Die Rippen 94 und 95 dienen zur Sicherung der Lage des Abgasrohrs 36. Die Rippen 94 und 95 sind insbesondere einteilig mit dem Motorgehäuse 93 ausgebildet. Die Rippen 94 und 95 ragen beidseitig neben das Abgasrohr 36. Der verbreiterte Bund am zweiten Endabschnitt 73 des ersten Abschnitts 37 liegt stirnseitig unmittelbar benachbart zu den Rippen 94 und 95 und begrenzt die Bewegung des Abgasrohrs 36 quer zu den Rippen 94 und 95. Der Abstand zwischen den Rändern 94 und 95 ist dabei so bemessen, dass der Verbindungsbereich 66 zu breit ist, um zwischen die Ränder 94 und 95 gezogen zu werden. Dadurch ist der Abschnitt 37 des Abgasrohrs 36 in seiner Längsrichtung zwischen den Rippen 94 und 95 gesichert. Dies ist auch in Fig. 12 deutlich erkennbar. Wie Fig. 12 auch zeigt, ist die Rippe 94 vorteilhaft aus zwei winklig zueinander verlaufenden Abschnitten 98 und 99 gebildet. Der Abschnitt 99 liegt quer zum Abgasrohr 36. Der Abschnitt 98 der Rippe 94 liegt seitlich von dem Längsabschnitt des ersten Abschnitts 37 des Abgasrohrs 36 unmittelbar benachbart zu dem Abgasrohr 36 und führt diesen Abschnitt 37 des Abgasrohrs 36. Durch den abgewinkelten Verlauf der Rippe 94 wird die Stabilität der Rippe 94 erhöht.

Die Rippen 94 und 95 sind insbesondere vorteilhaft, wenn der Abschnitt 37 des Abgasrohrs 36 aus Kunststoff besteht. Der Abschnitt 37 kann im Betrieb aufgrund der Temperaturen der durch den Abschnitt 37 strömenden Abgase weich werden. Durch die Rippen 94 und 95 wird die Lage des Abschnitts 37 des Abgasrohrs 36 auch bei hohen Temperaturen zuverlässig gesichert.

Um eine verbesserte Verbindung der Abschnitte 38 und 39 zu erreichen, sieht das Ausführungsbeispiel nach den Figuren 11 und 12 vor, die Abschnitte 38 und 39 miteinander zu verschweißen. Die Verschweißung erfolgt insbesondere mittels Ultraschallschweißen an zwei einander gegenüberliegenden Schweißstellen 96 und 97. Die Abdichtung der Abschnitte 38 und 39 kann über die in Fig. 7 gezeigte Geometrie des Stegs 85, der in die Nut 82 ragt, erfolgen.

Es kann auch vorgesehen sein, dass der Steg 85 und die Nut 82 (Fig. 7) entfallen, insbesondere, wenn eine ausreichende Dichtheit des Verbindungsbereichs 67 durch andere Mittel erreicht wird.

## Patentansprüche

1. Heckenschere mit mindestens einem Messerbalken (3, 4) und mit einem Verbrennungsmotor (15), der den mindestens einen Messerbalken (3, 4) hin- und hergehend antreibt, wobei der Verbrennungsmotor (15) einen Abgasschalldämpfer (34) aufweist, aus dem die Abgase durch einen Auslass (52) austreten, wobei der Auslass (52) über ein Abgasrohr (36) mit einer Auslassöffnung (42) verbunden ist,
das Abgasrohr (36) dichtend am Auslass (52) des Abgasschalldämpfers (34) fixiert ist, **dadurch gekennzeichnet, dass** das Abgasrohr (36) mehrteilig ausgebildet ist und mindestens einen ersten Abschnitt (37) und einen vom ersten Abschnitt (37) getrennt ausgebildeten zweiten Abschnitt (38) umfasst und dass mindestens ein Abschnitt (37, 38, 39) des Abgasrohrs (36) aus Kunststoff besteht.

2. Heckenschere nach Anspruch 1,
**dadurch gekennzeichnet, dass** der erste Abschnitt (37) und der zweite Abschnitt (38) aus unterschiedlichen Materialien bestehen.

3. Heckenschere nach Anspruch 1 oder 2,
**dadurch gekennzeichnet, dass** der erste Abschnitt (37) aus einem Elastomer besteht.

4. Heckenschere nach einem der Ansprüche 1 bis 3,
**dadurch gekennzeichnet, dass** der zweite Abschnitt (38) aus einem formstabilen Kunststoff besteht.

5. Heckenschere nach einem der Ansprüche 1 bis 4,
**dadurch gekennzeichnet, dass** der Auslass (52) aus dem Abgasschalldämpfer (34) an einem Auslassstutzen (35) ausgebildet ist, der einen umlaufenden Wulst (53) aufweist, und dass der erste Abschnitt (37) den Wulst (53) hintergreift.

6. Heckenschere nach einem der Ansprüche 1 bis 5,
**dadurch gekennzeichnet, dass** der erste Abschnitt (37) einen metallischen Einsatz besitzt, der am Abgasschalldämpfer (34) klemmend gehalten ist.

7. Heckenschere nach einem der Ansprüche 1 bis 6,
**dadurch gekennzeichnet, dass** der mindestens eine Messerbalken (3, 4) an einer Vorderseite (57) der Heckenschere nach vorne ragt, und dass die Abgase die Auslassöffnung (42) in einer Ausblasrichtung (43) verlassen, die bezogen auf eine übliche Abstellposition (55) der Heckenschere (1) nach vorne und oben gerichtet ist.

8. Heckenschere nach einem der Ansprüche 1 bis 7,
**dadurch gekennzeichnet, dass** die Heckenschere (1) eine Längsmittelebene (58) besitzt, die die Längsmittelachse (60) mindestens eines Messerbalkens (3, 4) enthält und senkrecht zur Messerbalkenebene (61)mindestens eines Messerbalkens (3, 4) steht und dass die Ausblasrichtung (43) von der Mittelebene (58) weg gerichtet ist.

9. Heckenschere nach einem der Ansprüche 1 bis 8,
**dadurch gekennzeichnet, dass** das Abgasrohr (36) in dem stromauf an die Auslassöffnung (42) angrenzenden Bereich einen Düsenabschnitt (50) besitzt, in dem sich der Strömungsquerschnitt in Strömungsrichtung verringert.

10. Heckenschere nach einem der Ansprüche 1 bis 9,
**dadurch gekennzeichnet, dass** an dem zweiten Abschnitt (37) ein Befestigungsauge (40) zur Fixierung an einem Gehäuseteil der Heckenschere (1) ausgebildet ist.

11. Heckenschere nach einem der Ansprüche 1 bis 10,
**dadurch gekennzeichnet, dass** das Abgasrohr (36) einen dritten Abschnitt (39) umfasst, der an den zweiten Abschnitt (38) anschließt.

12. Heckenschere nach Anspruch 11,
**dadurch gekennzeichnet, dass** die Ausblasöffnung (42) an dem dritten Abschnitt (39) ausgebildet ist.

13. Heckenschere nach Anspruch 11 oder 12,
**dadurch gekennzeichnet, dass** die Längsmittelachse (48) des zweiten Abschnitts (38) mit der Längsmittelachse (49) des dritten Abschnitts (39) einen Winkel (α) einschließt, der von etwa 2° bis etwa 30° beträgt.

14. Heckenschere nach einem der Ansprüche 11 bis 13,
**dadurch gekennzeichnet, dass** der dritte Abschnitt (39) aus formstabilem Kunststoff besteht und ein Befestigungsauge (41) zur Befestigung an einem Gehäuseteil der Heckenschere (1) aufweist.

15. Heckenschere nach einem der Ansprüche 1 bis 14,
**dadurch gekennzeichnet, dass** die Heckenschere (1) ein Motorgehäuse (93) besitzt und dass mindestens eine Rippe (94, 95) an dem Motorgehäuse (93) angeordnet ist, die zur Sicherung der Lage des Abgasrohrs (36) dient.

## Claims

1. Hedge trimmer with at least one cutter bar (3, 4) and an internal combustion engine (15), which drives the at least one cutter bar (3, 4) with a reciprocating motion, wherein the internal combustion engine (15) has an exhaust silencer (34), from which the exhaust gases flow through an outlet (52), wherein the outlet (52) is connected to an exhaust port (42) via an exhaust pipe (36) and the exhaust pipe (36) is secured to the outlet (52) of the exhaust silencer (34) in a sealing manner,
**characterised in that** the exhaust pipe (36) is designed in several parts and comprises at least one first section (37) and a second section (38) separate from the first section (37), and **in that** at least one section (37, 38, 39) of the exhaust pipe (36) consists of a plastic material.

2. Hedge trimmer according to claim 1,
**characterised in that** the first section (37) and the second section (38) consist of different materials.

3. Hedge trimmer according to claim 1 or 2,
**characterised in that** the first section (37) consists of an elastomer.

4. Hedge trimmer according to any of claims 1 to 3,
**characterised in that** the second section (38) consists of a dimensionally stable plastic material.

5. Hedge trimmer according to any of claims 1 to 4,
**characterised in that** the outlet (52) from the exhaust silencer (34) is formed on an outlet connector (35) having a continuous beading (53), and **in that** the first section (37) engages the beading (53) from behind.

6. Hedge trimmer according to any of claims 1 to 5,
**characterised in that** the first section (37) has a metallic insert which is clamped to the exhaust silencer (34).

7. Hedge trimmer according to any of claims 1 to 6,
**characterised in that** the at least one cutter bar (3, 4) projects towards the front at the front side of the hedge trimmer, and **in that** the exhaust gases are discharged from the exhaust port (42) in a blow-out direction (43) which is oriented towards the front and upwards relative to a usual parking position (55) of the hedge trimmer (1).

8. Hedge trimmer according to any of claims 1 to 7,
**characterised in that** the hedge trimmer (1) has a longitudinal central plane (58), which contains the longitudinal central axis (60) of at least one cutter bar (3, 4) and is perpendicular to the cutter bar plane (61) of at least one cutter bar (3, 4), and **in that** the blow-out direction (43) is oriented away from the central plane (58).

9. Hedge trimmer according to any of claims 1 to 8,
**characterised in that** the exhaust pipe (36) has a nozzle section (50) where the flow cross-section is reduced in the flow direction in the region upstream of and adjoining the exhaust port (42).

10. Hedge trimmer according to any of claims 1 to 9,
**characterised in that** a fastening eye (40) for fixing to a housing part of the hedge trimmer (1) is formed at the second section (37).

11. Hedge trimmer according to any of claims 1 to 10,
**characterised in that** the exhaust pipe (36) comprises a third section (39), which adjoins the second section (38).

12. Hedge trimmer according to claim 11,
**characterised in that** the exhaust port (42) is formed at the third section (39).

13. Hedge trimmer according to claim 11 or 12,
**characterised in that** the longitudinal central axis (48) of the second section (38) encloses with the longitudinal central axis (49) of the third section (39) an angle (α) of approximately 2° to 30°.

14. Hedge trimmer according to any of claims 11 to 13,
**characterised in that** the third section (39) consists of a dimensionally stable plastic material and has a fastening eye (41) for fixing to a housing part of the hedge trimmer (1).

15. Hedge trimmer according to any of claims 1 to 14,
**characterised in that** the hedge trimmer (1) has an engine housing (93), and **in that** at least one rib (94, 95) used for securing the position of the exhaust pipe (36) is provided on the engine housing (93).

## Revendications

1. Taille-haie avec au moins une barre de coupe (3, 4) et avec un moteur à combustion (15) qui entraîne alternativement l'au moins une barre de coupe (3, 4), dans lequel le moteur à combustion (15) présente un silencieux de gaz d'échappement (34), duquel les gaz d'échappement sortent par une sortie (52), dans lequel la sortie (52) est raccordée par le biais d'un tube de gaz d'échappement (36) à une ouverture de sortie (42),
le tube de gaz d'échappement (36) est fixé de manière étanche à la sortie (52) du silencieux de gaz d'échappement (34), **caractérisé en ce que** le tube d'échappement (36) est réalisé en plusieurs parties et comprend au moins une première section (37) et une deuxième section (38) réalisée séparément de la première section (37) et qu'au moins une section (37, 38, 39) du tube de gaz d'échappement (36) se compose de matière plastique.

2. Taille-haie selon la revendication 1,
**caractérisé en ce que** la première section (37) et la deuxième section (38) se composent de différents matériaux.

3. Taille-haie selon la revendication 1 ou 2,
**caractérisé en ce que** la première section (37) se compose d'un élastomère.

4. Taille-haie selon l'une des revendications 1 à 3,
**caractérisé en ce que** la deuxième section (38) se compose d'une matière plastique de forme stable.

5. Taille-haie selon l'une des revendications 1 à 4,
**caractérisé en ce que** la sortie (52) du silencieux de gaz d'échappement (34) est réalisée à une tubulure de sortie (35) qui présente un bourrelet périphérique (53), et que la première section (37) vient en prise derrière le bourrelet (53).

6. Taille-haie selon l'une des revendications 1 à 5,
**caractérisé en ce que** la première section (37) possède un insert métallique qui est maintenu par serrage au silencieux de gaz d'échappement (34).

7. Taille-haie selon l'une des revendications 1 à 6,
**caractérisé en ce que** l'au moins une barre de coupe (3, 4) dépasse sur un côté avant (57) du taille-haie vers l'avant, et que les gaz d'échappement quittent l'ouverture de sortie (42) dans un sens de soufflage (43) qui est dirigé vers l'avant et le haut par rapport à une position de rangement usuelle (55) du taille-haie (1).

8. Taille-haie selon l'une des revendications 1 à 7,
**caractérisé en ce que** le taille-haie (1) possède un plan médian longitudinal (58) qui contient l'axe médian longitudinal (60) au moins d'une barre de coupe (3, 4) et est perpendiculaire au plan de barre de coupe (61) au moins d'une barre de coupe (3, 4) et que le sens de soufflage (43) est dirigé de manière à s'éloigner du plan médian (58).

9. Taille-haie selon l'une des revendications 1 à 8,
**caractérisé en ce que** le tube de gaz d'échappement (36) possède dans la zone contiguë en amont à l'ouverture de sortie (42) une section de buse (50) dans laquelle la section transversale d'écoulement diminue dans le sens d'écoulement.

10. Taille-haie selon l'une des revendications 1 à 9,
**caractérisé en ce qu'**à la deuxième section (37), un oeil de fixation (40) est réalisé pour la fixation à une partie de boîtier du taille-haie (1).

11. Taille-haie selon l'une des revendications 1 à 10,
**caractérisé en ce que** le tube de gaz d'échappement (36) comprend une troisième section (39) qui est contiguë à la deuxième section (38).

12. Taille-haie selon la revendication 11,
**caractérisé en ce que** l'ouverture de soufflage (42) est réalisée à la troisième section (39).

13. Taille-haie selon la revendication 11 ou 12,
**caractérisé en ce que** l'axe médian longitudinal (48) de la deuxième section (38) forme avec l'axe médian longitudinal (49) de la troisième section (39) un angle (α) qui s'élève d'environ 2° à environ 30°.

14. Taille-haie selon l'une des revendications 11 à 13,
**caractérisé en ce que** la troisième section (39) se compose de matière plastique de forme stable et présente un oeil de fixation (41) pour la fixation à une partie de boîtier du taille-haie (1).

15. Taille-haie selon l'une des revendications 1 à 14,
**caractérisé en ce que** le taille-haie (1) possède un boîtier de moteur (93) et qu'au moins une nervure (94, 95) est disposée sur le boîtier de moteur (93) qui sert à la fixation de la position du tube de gaz d'échappement (36).
